(19) **Europäisches Patentamt**

**European Patent Office**

**Office européen des brevets**

(11) **EP 1 647 528 A1**

(12) **EUROPEAN PATENT APPLICATION**
published in accordance with Art. 158(3) EPC

(43) Date of publication:
**19.04.2006 Bulletin 2006/16**

(51) Int Cl.:
**C02F 1/68** (2000.01)    **C02F 1/46** (2000.01)
**C02F 1/50** (2000.01)

(21) Application number: **03738669.5**

(22) Date of filing: **03.07.2003**

(86) International application number:
**PCT/JP2003/008485**

(87) International publication number:
**WO 2005/003042 (13.01.2005 Gazette 2005/02)**

(84) Designated Contracting States:
**DE FR IT**

(71) Applicant: **Sanden Corporation**
**Isesaki-shi,**
**Gunma 372-8502 (JP)**

(72) Inventors:
- **KATO, Isao,**
  **c/o SANDEN CORPORATION**
  **Isesaki-shi,**
  **Gunma 372-8502 (JP)**
- **KASHIMA, Hideo,**
  **c/o SANDEN CORPORATION**
  **Isesaki-shi,**
  **Gunma 372-8502 (JP)**

- **SUGA, Takaaki,**
  **c/o SANDEN CORPORATION**
  **Isesaki-shi,**
  **Gunma 372-8502 (JP)**
- **CHIKU, Toshiya,**
  **c/o SANDEN CORPORATION**
  **Isesaki-shi,**
  **Gunma 372-8502 (JP)**

(74) Representative: **Haley, Stephen**
**Gill Jennings & Every LLP**
**Broadgate House**
**7 Eldon Street**
**London EC2M 7LH (GB)**

(54) **MINERAL WATER FEEDING APPARATUS**

(57)     A mineral-water supplying apparatus includes: a mineral-water producing apparatus for producing mineral water by passing raw water, such as city water, through a mineral eluting material(s); a drink conveying pipe for conveying the mineral water produced in the mineral-water producing apparatus to a drinking water spout; a cleaning water pipe diverging from the drink conveying pipe for conveying mineral water to a nozzle; a pump for forcing the mineral water produced in the mineral-water producing apparatus to flow through the drink conveying pipe and the cleaning water pipe; and a chlorine generator for increasing the concentration of chlorine in the mineral water produced in the mineral-water producing apparatus. This allows chlorine to be added to the resulting mineral water and increases the concentration of chlorine in the mineral water.

F I G. 1

**Description**

Technical Field

This invention relates to a mineral-water supplying apparatus which feeds mineral water produced in a mineral-water producing apparatus to a drink spout.

Background Art

In recent years, a mineral-water supplying apparatus is installed in many supermarkets and department stores to provide mineral water free for shoppers. Shoppers drop in at the place where a mineral-water supplying apparatus is located when they come shopping in such a supermarket or a department store and pack mineral water in PET bottles etc. they have brought from their home and take the mineral water back home.

The mineral-water supplying apparatus has a mineral-water producing apparatus installed in it inside. When producing mineral water, city water, as chlorine-ion containing water, is supplied to the inlet chamber of the mineral eluting tank of the mineral-water producing apparatus and passed through the mineral eluting material(s) (coral sands etc.). This allows mineral elements to be eluted from the mineral eluting material(s) and dissolved in the city water, and thereby producing mineral water. The mineral water flows out from the mineral eluting tank into the outlet chamber of the tank and is fed to containers shoppers have through the drink conveying pipe.

To keep city water sanitary and prevent bacteria from propagating in water-feed systems, available chlorine is added to city water. For the same reasons, the concentration of available chlorine must be kept from lowering even in the mineral water taken from a mineral-water producing apparatus. However, when city water is accumulated in the mineral eluting tank for a long time, a problem arises that available chlorine in the city water in the mineral eluting tank transpires of itself and its concentration gradually decreases.

To overcome this problem, the applicant of this invention has proposed a mineral-water supplying apparatus which includes a chlorine generator in its inlet chamber (Japanese Patent Application 2000-319191). According to this mineral-water supplying apparatus, city water, as chlorine-ion containing water, is electrolyzed by applying a DC voltage to the chlorine producing electrodes of the chlorine generator. The electrolysis of city water produces available chlorine in the inlet chamber, whereby the decrease in available chlorine concentration in the inlet chamber is prevented.

The process of producing available chlorine will be described below. Chlorine ions (Cl$^-$) contained in city water react on the chlorine producing electrode as follows:

$$2Cl^- \quad Cl_2 + 2e^-$$

to produce chlorine ($Cl_2$).
When this chlorine ($Cl_2$) dissolves in water ($H_2O$), the following reaction occurs:

$$Cl_2 + H_2O \quad HClO + HCl$$

to produce hypochlorous acid (HClO), which is available chlorine.

As described above, conventional mineral-water supplying apparatuses are so designed that they prevent the decrease in the concentration of available chlorine in the inlet chamber, and thereby supplying sanitary mineral water, while performing sanitation control of the mineral-water feed system.

However, when the total amount of the water having passed through the mineral eluting material is still small (when only a short time has elapsed since the mineral eluting tank was loaded with unused a mineral eluting material (s)), almost all the available chlorine component in city water is lost during the time when the city water passes through the mineral eluting material(s). Further, a long-term use of the mineral eluting material(s) makes half of the available chlorine component to be lost even when the amount of the water having passed through the mineral eluting material (s) is increased.

It is presumed that the loss or decrease of the available chlorine component is due to the decomposition of the available chlorine component by the activity of the mineral eluting material(s). This is shown by the following reaction equation:

$$2HOCl + CaCO_3 \quad CaCl_2 + H_2CO_3 + O_2$$

(HOCl; hypochlorous acid, $CaCO_3$; calcium carbonate, $CaCl_2$; calcium chloride, $H_2CO_3$; carbonic acid, $O_2$; oxygen)

As a result, in conventional mineral-water supplying apparatuses, sanitary control of the outlet chamber, where mineral water is accumulated, or the drink conveying pipe is sufficient.

Further, before pouring mineral water into containers, containers are sometimes cleaned with the mineral water; however, the mineral water is unfit for cleaning the containers since the concentration of available chlorine in the mineral water is too low.

In light of the above described problems with conventional mineral-water supplying apparatuses, the object of this invention is to provide a mineral-water supplying apparatus which can prevent the decrease in the concentration of available chlorine in the mineral water produced by a mineral-water producing apparatus, prevent the propagation of bacteria in the downstream piping of the mineral-water producing apparatus, and feed mineral water fit for cleaning containers.

Disclosure of the Invention

The mineral-water supplying apparatus of this invention includes: a mineral-water producing apparatus which produces mineral water by passing raw water, such as city water, through a mineral eluting material (s) ; a drink conveying pipe which conveys the mineral water produced in the mineral-water producing apparatus to a drink spout; a cleaning water pipe which diverges from the drink conveying pipe and conveys the mineral water produced in the mineral-water producing apparatus to a cleaning-water spout; a pump which forces the mineral water produced in the mineral-water producing apparatus to flow through the drink conveying pipe and the cleaning water pipe; and chlorine-concentration increasing means which increases the concentration of chlorine in the mineral water produced in the mineral-water producing apparatus.

According to this invention, when raw water, such as city water, passes through a mineral eluting material(s), a mineral element(s) is eluted from the mineral eluting material(s), whereby mineral water is produced. When raw water passes through a mineral eluting material(s), available chlorine contained in the raw water is lost due to the activity of the mineral eluting material(s) or, even if all of the available chlorine is not lost, the concentration of the available chlorine in the mineral water is significantly decreased. However, since the mineral-water supplying apparatus of this invention includes chlorine-concentration increasing means, available chlorine is added to the mineral water again and the concentration of available chlorine increases again.

Brief Description of the Drawings

Figure 1 is a water circuit diagram of a mineral-water supplying apparatus in accordance with the first embodiment of this invention;

Figure 2 is a sectional view showing the collection tank portion of the mineral-water supplying apparatus in accordance with the first embodiment of this invention, in which a diffusion pipe is arranged;

Figure 3 is a water circuit diagram of a mineral-water supplying apparatus in accordance with the second embodiment of this invention;

Figure 4 is a sectional view of the mineral-water producing apparatus in accordance with the second embodiment of this invention;

Figure 5 is a sectional view of the mineral-water producing apparatus in accordance with the third embodiment of this invention;

Figure 6 is a sectional view of the mineral-water producing apparatus in accordance with the fourth embodiment of this invention;

Figure 7 is a sectional view of the mineral-water producing apparatus in accordance with the fifth embodiment of this invention;

Figure 8 is a perspective sectional view showing the partition member in accordance with the fifth embodiment of this invention, in which chlorine producing electrodes are arranged; and

Figure 9 is a sectional view of the mineral-water producing apparatus in accordance with the sixth embodiment of this invention.

Best Mode for Carrying Out the Invention

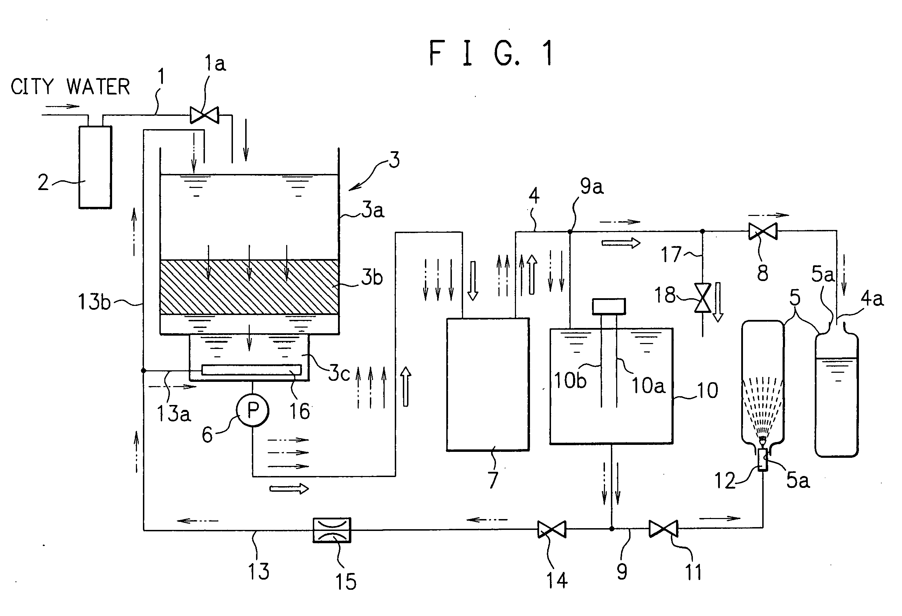

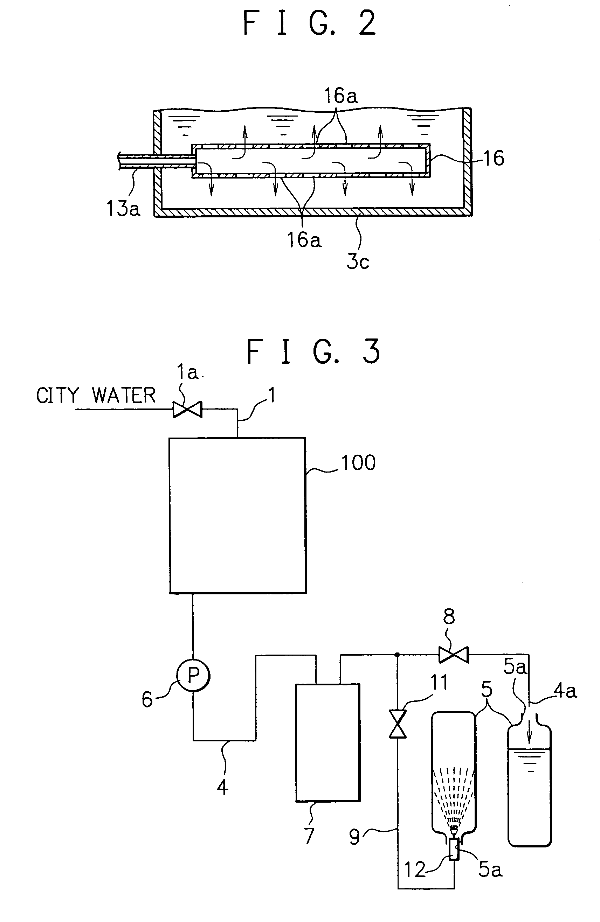

Figures 1 and 2 show a mineral-water supplying apparatus in accordance with the first embodiment of this invention. The mineral-water supplying apparatus includes a water-supply pipe 1 through which city water is supplied. A water purification device 2 is located on the water-supply pipe 1 and city water is purified by the water purification device 2. The city water flowing through the water-supply pipe 1 is supplied to the mineral-water producing apparatus 3. The water-flow to the mineral-water producing apparatus 3 is controlled by an on-off valve 1a.

The mineral-water producing apparatus 3 includes a mineral eluting tank 3a which receives city water. In the inside of the mineral eluting tank 3a are arranged a mineral eluting material(s) 3b such as mineral stone and coral sand. When city water passes through the mineral eluting material(s) 3b, a mineral element(s) is eluted from the mineral eluting material(s) 3b, whereby mineral water is produced. Beneath the mineral eluting tank 3a is formed a collection tank portion 3c in which mineral water is accumulated.

To the collection tank portion 3c a drink conveying pipe 4 is connected. The mineral water in the collection tank portion 3c is conveyed to a drink spout 4a through the drink conveying pipe 4 and poured into containers 5, such as PET bottles, which visitors at supermarkets or department stores bring. In the drink conveying pipe 4, a pump 6, a bacteria-removing filter unit 7 and an on-off valve 8 are located from the upstream toward the downstream in this order. In the bacteria-removing filter unit 7 is arranged a bacteria-removing filter such as a hollow fiber membrane module (not shown in the figure). When mineral water is passed through the bacteria-removing filter, bacteria floating in the mineral water are trapped by the filter.

In the drink conveying pipe 4, a cleaning water pipe 9 diverges from its piping between the bacteria-removing filter unit 7 and the on-off valve 8. In the cleaning water pipe 9, a closed chlorine generator 10, an on-off valve 11 and a nozzle 12 (an outlet for cleaning water) are arranged from the upstream towards the downstream in this order. The chlorine generator 10 is a known electrolytic type of one and includes a pair of electrodes 10a, 10b to which a DC voltage is applied. City water is electrolyzed by powering the electrodes 10a, 10b and hypochlorous acid (HC10), which is available chlorine, is produced as described in the above "Background Art" section. This in turn produces sterilization and cleaning water in the chlorine generator 10. In the chlorine generator 10, the electrodes 10a, 10b are powered at predetermined intervals to keep the concentration of available chlorine in the chlorine generator 10 at a predetermined value (the concentration effective in sterilization and cleaning).

In the cleaning water pipe 9, a recirculation pipe 13 is connected to its piping between the chlorine generator 10 and the on-of f valve 11. The cleaning and sterilization water produced in the chlorine generator 10 is conveyed to the mineral-water producing apparatus 3 through the recirculation pipe 13. In the recirculation pipe 13, an on-off valve 14 and a flow control valve 15 are located from the upstream towards the downstream in this order. The tip portion of the recirculation pipe 13 is branched into two. One branched pipe 13a is extended into the collection tank portion 3c of the mineral-water producing apparatus 3. The other branched pipe 13b is extended to the upper opening of the mineral eluting tank 3a. On the branched pipe 13a is located a cylindrical diffusion pipe 16. And the diffusion pipe 16 is arranged in the collection tank portion 3c. In the circumferential side wall of the diffusion pipe 16, a number of diffusion holes 16a are provided, as shown in Figure 2.

In the drink conveying pipe 4, a drain pipe 17 diverges from the piping between the diverging and connecting point 9a of the cleaning water pipe 9 and the on-off valve 8. In the drain pipe 17 is located an on-off valve 18.

In the mineral-water supplying apparatus in accordance with this embodiment, when pouring mineral water into a container 5, first the container 5 is sterilized and cleaned to obtain a sanitary container 5. In this sterilization and cleaning process, the nozzle 12 is inserted into the mouth portion 5a of the container 5 with the mouth portion 5a facing down. After that, the on-off valves 8, 14 and 18 are closed while opening the on-off valve 11, and the pump 6 is driven. This allows the mineral water in the collection tank portion 3c to flow to the cleaning water pipe 9 through the drink conveying pipe 4 and flow into the chlorine generator 10. And the sterilized and cleaned water in the chlorine generator 10 is pushed out in the same amount as that of the mineral water flowed into the chlorine generator 10. The mineral water pushed out from the chlorine generator is supplied to the container 5 via the on-off valve 11 and the nozzle 12. Thus the inside of the container 5 is sterilized and cleaned. Once the amount of water in the mineral eluting tank 3a is decreased, city water is automatically supplied from the water-supply pipe 1, as shown by the continuous line arrow of Figure 1.

The inside of the container 5 is sprayed with sterilization and cleaning water from the nozzle 12, whereby it is efficiently sterilized and cleaned.

After completing the above describe sterilization and cleaning step, a mineral-water pouring step of pouring mineral water into the container 5 is performed. In this step, first, the nozzle 12 is removed from the container 5 having been cleaned. Then, the mouth portion 5a of the container 5 is located just under the drink spout 4a. After that, the on-off valve 8 is opened, while closing the on-off valves 11, 14 and 18, and the pump 6 is driven. This allows the mineral water in the tank 3c to flow to the bacteria-removing filter unit 7 through the drink conveying pipe 4, then to the on-off valve 8, and lastly into the container 5 through the drink spout 4a, as shown by the alternate long and short dash line.

When using the mineral-water producing apparatus 3 over a long time, bacteria might propagate in the mineral eluting tank 3a, a mineral eluting material(s) 3b and the collection tank portion 3c. In such a case, sterilization and cleaning of the mineral-water producing apparatus is performed. In this step, the on-off valve 14 is opened, while closing the on-off valves 8, 11 and 18, and the pump 6 is driven. This allows the mineral water in the tank 3c to flow to the drink conveying pipe 4, then to the cleaning water pipe 9, and lastly into the chlorine generator 10, as shown by the chain double-dashed line arrow of Figure 1. The sterilized and cleaned water in the chlorine generator 10 is pushed out in the same amount as that of the mineral water flowed into the chlorine generator 10. The mineral water pushed out from the chlorine generator circulates, specifically it flows through the on-off valve 14 and the flow control valve 15 and returns to the collection tank portion 3c and the upper portion of the mineral eluting tank 3a through the diverging pipes 13a and 13b. The circulation of mineral water as described above causes the circulation of the sterilization and cleaning water which contains a high concentration of chlorine, thereby sterilizing and cleaning the mineral-water producing apparatus 3.

In this sterilization and cleaning step, the sterilization and cleaning water is diffused in the collection tank portion 3c via the diffusion holes 16a. Accordingly, the sterilization and cleaning water is mixed uniformly with the mineral water in the collection tank portion 3c, whereby the entire collection tank portion 3c is sterilized and cleaned reliably.

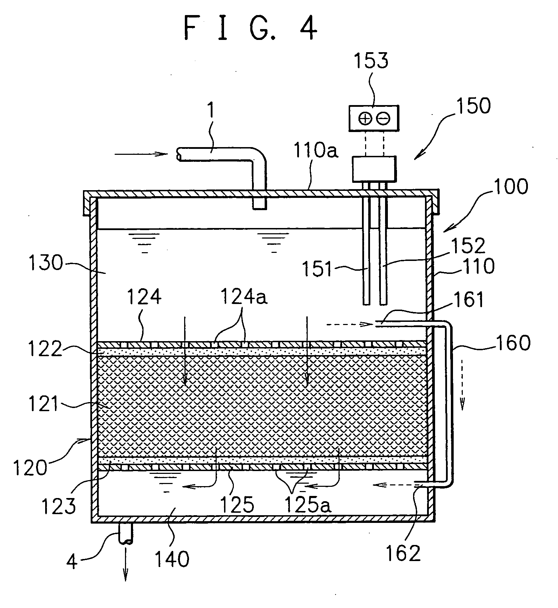

Figures 3 and 4 show a mineral-water supplying apparatus in accordance with the second embodiment of this invention. The same constituents as those of the mineral-water supplying apparatus in accordance with the first embodiment are described with the same reference numerals.

First the overall structure of the mineral-water supplying apparatus will be described with reference to Figure 3. The water-supply pipe 1, the on-off valves 1a, 8 and 11, the drink conveying pipe 4, the container 5, the pump 6, bacteria-removing filter unit 7, cleaning water pipe 9 and nozzle 12, which constitute the mineral-water supplying apparatus, have the same structure as those of the apparatus in accordance with the first embodiment.

In the above described first embodiment, the concentration of chlorine in mineral water is increased by providing the chlorine generator 10 for the cleaning water pipe 9. On the other hand, in this embodiment, the concentration of chlorine in mineral water is increased in the mineral-water producing apparatus 100.

The structure of the mineral-water supplying apparatus in accordance with this embodiment will be described with reference to Figure 4. The mineral-water producing apparatus 100 includes a mineral eluting tank 110 whose upper opening is blocked with a lid body 110a. The inside of the mineral eluting tank 110 is separated into two: an upper part and a lower part by the mineral eluting portion 120. In the upper part of the mineral eluting tank 110 is formed an inlet chamber 130 whose capacity to hold water is large, whereas in the lower part of the mineral eluting tank 110 is formed an outlet chamber 140 whose capacity to hold water is small.

The mineral eluting portion 120 is packed with a mineral eluting material(s) 121, such as coral sand, mineral stone, ceramic particle and mineral formulations. The mineral eluting material(s) 121 are packed in the mineral eluting portion 120 in such a manner that water is allowed to flow from the inlet chamber 130 towards the outlet chamber 140. The thickness of the mineral eluting portion 120 in the vertical direction is sufficient to elute mineral elements. On the upper and lower surfaces of the mineral eluting material (s) 121 nonwoven fabrics 122, 123 are stuck to prevent dust etc. from entering. On the upper surface of the upper nonwoven fabric 122 and the lower surface of the lower nonwoven fabric 123 are installed straightening boards 124, 125. In the straightening boards 124, 125 are provided a number of waterthrough holes 124a, 125a. The arrangement of waterthrough holes 124a, 125a is so designed that water flowing from the inlet chamber 130 towards the outlet chamber 140 flows throughout the mineral eluting portion 120 uniformly.

To the inlet chamber 130 is supplied city water through the water-feed pipe 1. In the inlet chamber 130 is installed a chlorine generator 150. The chlorine generator 150 includes a chlorine producing portion, specifically a pair of chlorine producing electrodes 151, 152. The chlorine producing electrodes 151, 152 are immersed in the city water accumulated in the inlet chamber 130. When energizing the chlorine producing electrodes 151, 152 from a power supply 153, a DC voltage is applied across the electrodes 151, 152. The application of this DC voltage allows hypochlorous acid (HClO), which is available chlorine, to be produced as described in "Background Art" section, whereby sterilized and cleaned water is produced. In the chlorine generator 150, the electrodes 151, 152 are powered at predetermined intervals to keep the concentration of available chlorine in the chlorine generator 150 at a predetermined value (the concentration effective in sterilization).

A bypass line, a bypass pipe 160 in this embodiment, which is laid so that it goes around the mineral eluting portion 120 is installed between the inlet chamber 130 and the outlet chamber 140. The inlet 161 of the bypass pipe 160 is positioned in the inlet chamber 130, while the outlet 162 of the bypass pipe 160 is positioned in the outlet chamber 140. The pipe portion between the inlet 161 and the outlet 162 is laid outside the mineral eluting tank 110. Further, the inlet 161 of the bypass pipe 160 is positioned in the vicinity of the chlorine producing electrodes 151, 152. As a result, water produced between the electrodes 151, 152 and containing a high concentration of available chlorine is easy to take in the bypass pipe 160.

To the outlet chamber 140 is connected a drink conveying pipe 4. The portion to which the drink conveying pipe 4 is connected is positioned on the opposite side to the outlet 162 of the bypass pipe 160. As a result, the water having entered the outlet chamber 140 through the bypass pipe 160 flows throughout the outlet chamber 140 and into the drink conveying pipe 4.

According to this embodiment, when cleaning the container 5, the pump 6 is driven and the on-off valve 8 is closed, while opening the on-off valve 11. This allows the mineral water in the outlet chamber 140 to flow though the drink conveying pipe 4 and the cleaning water pipe 9 and then be sprayed from the nozzle 12 into the container 5. Thus, the container 5 is cleaned. Once the cleaning step is completed, the mouth portion 5a of the container 5 is removed from the nozzle 12 and located opposite to the drink spout 4a. After that, the on-off valve 11 is closed, while opening the on-off valve 8, and the pump 6 is driven. As a result, the mineral water in the outlet chamber 140 flows through the drink conveying pipe 4 and is poured into the sanitary container 5.

As described above, when supplying mineral water, as cleaning water or drinking water, into the container 5, the mineral water in the outlet chamber 140 is taken, and the same amount of water in the inlet chamber 130 as that of the mineral water having flowed from the outlet chamber 140 flows into the outlet chamber 140. Some of the water flowing from the inlet chamber 130 to the outlet chamber 140 passes through the mineral eluting portion 120 and is turned into mineral water, which flows into the outlet chamber 140 (the continuous line arrow in Figure 4). On the other hand, some of the water in the inlet chamber 130 which stays near the chlorine producing electrodes 151, 152 (water containing a high concentration of available chlorine) flows through the bypass pipe 160 and into the outlet chamber 140 (the dashed line arrow in Figure 4).

The water having passed through the mineral eluting portion 120 contains a lower concentration of available chlorine because of the decomposition of available chlorine component by the activity of the mineral eluting material (s) 121. On the other hand, the water flowing through the bypass pipe 160 has higher concentration of available chorine. Since the two types of water mix with each other in the outlet chamber 140, the mineral water in the outlet chamber 140 contains a sufficient amount of mineral component, and at the same time, contains a proper concentration of available chlorine.

Accordingly, the decrease in available chlorine concentration is prevented both for the city water in the inlet chamber 130 and for the mineral water in the outlet chamber 140, whereby the entire mineral eluting tank 110 can be kept sanitary. In addition, when supplying mineral water from the outlet chamber 140, the drink conveying pipe 4 and the cleaning water pipe 9 are sterilized, and thereby being kept sanitary.

Further, since the inlet 161 of the bypass pipe 160 is positioned near the chlorine producing electrodes 151 and 152, the water flowing through the bypass pipe 160 contains a high concentration of available chlorine. Accordingly, the decrease in available chlorine concentration can be prevented by passing only a small amount of water through the bypass pipe 160, and thereby holding the decrease in amount of mineral water produced (the amount of water passing through the mineral eluting portion 120) small. The amount of the water flowing through the bypass pipe 160 is determined by the diameter of the pipe 160, and therefore a suitable bypass pipe 160 can be selected from among those having various diameters, taking into account the available chlorine concentration of mineral water.

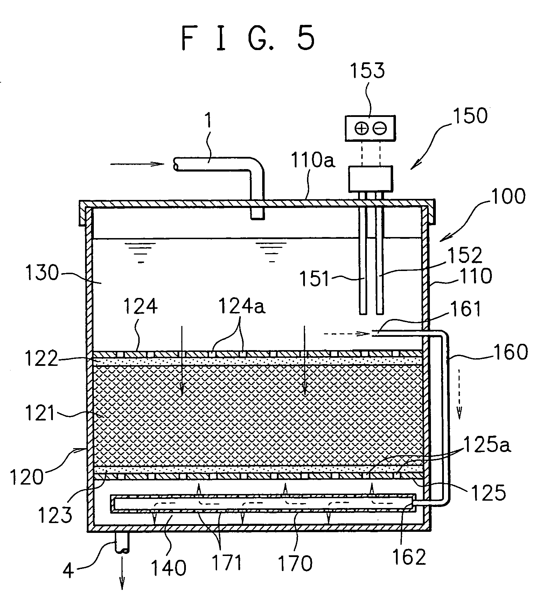

Figure 5 shows a mineral-water supplying apparatus in accordance with the third embodiment of this invention. The apparatus of this embodiment is obtained by connecting a diffusion pipe 170 to the bypass pipe 160 of the mineral-water producing apparatus in accordance with the second embodiment. The same constituents as those of the apparatus in accordance with the second embodiment are denoted with the same reference numerals and the description thereof will be omitted.

The diffusion pipe 170 is connected to the outlet 162 of the bypass pipe 160 and positioned in the outlet chamber 140 of the mineral eluting tank 110. The diffusion pipe 170 is formed in the shape of a long, narrow cylinder and a number of diffusion holes 171 are provided in its circumferential side wall. The diffusion pipe 170 is so designed that the water having flowed thereinto flows out to the outlet chamber 140 through the diffusion holes 171.

According to this embodiment, water in the inlet chamber 130, which contains a high concentration of available chlorine, flows to the diffusion pipe 170 through the bypass pipe 160. The water having flowed into the diffusion pipe 170 is diffused throughout the outlet chamber 140 through the diffusion holes 171 (the dashed line arrow in Figure 5) and mixed with the mineral water uniformly. Thus, the entire outlet chamber 140 can be kept sanitary.

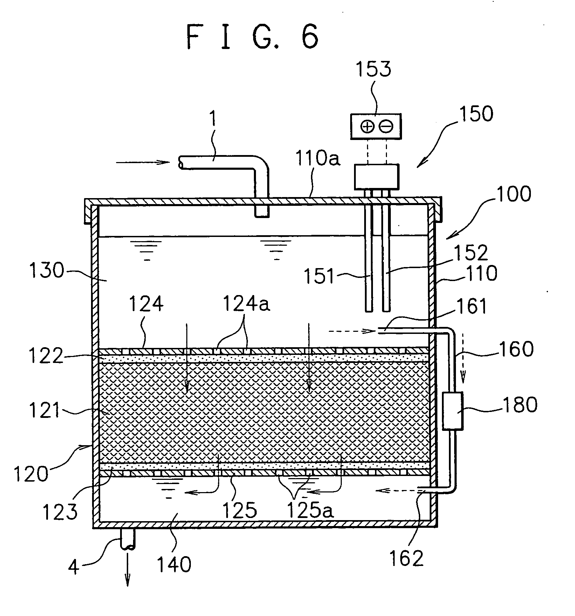

Figure 6 shows a mineral-water supplying apparatus in accordance with the fourth embodiment of this invention. The apparatus of this embodiment is obtained by providing flow control means, for example, a flow control valve 180 to the bypass pipe 160 of the mineral-water producing apparatus 100 in accordance with the second embodiment. The same constituents as those of the apparatus in accordance with the second embodiment are denoted with the same reference numerals and the description thereof will be omitted.

The concentration of the available chlorine in the city water in the inlet chamber 130 varies depending on the chlorine ion concentration and the temperature of the city water, and besides, the magnitude of the voltage applied to the chlorine producing electrodes 151 and 152. In addition, the concentration of the available chlorine in the mineral water in the outlet chamber 140 varied depending on the above described varying factors. Even if the concentration of the available chlorine in the inlet chamber 130 is kept constant, the concentration of the available chlorine in the mineral water in the outlet chamber 140 also varies depending on the diameter of the bypass pipe 160, the amount and the activity of the mineral eluting material(s) 121.

So the apparatus in accordance with this embodiment includes a flow control valve 180 in the bypass pipe 160. When the concentration of the available chlorine in the mineral water is higher than a desired one, the flow control valve 180 is throttled to decrease the amount of water flowing through the bypass pipe 160. Conversely, when the concentration of the available chlorine in the mineral water is lower than a desired one, the flow control valve 180 is released to increase the amount of water flowing through the bypass pipe 160.

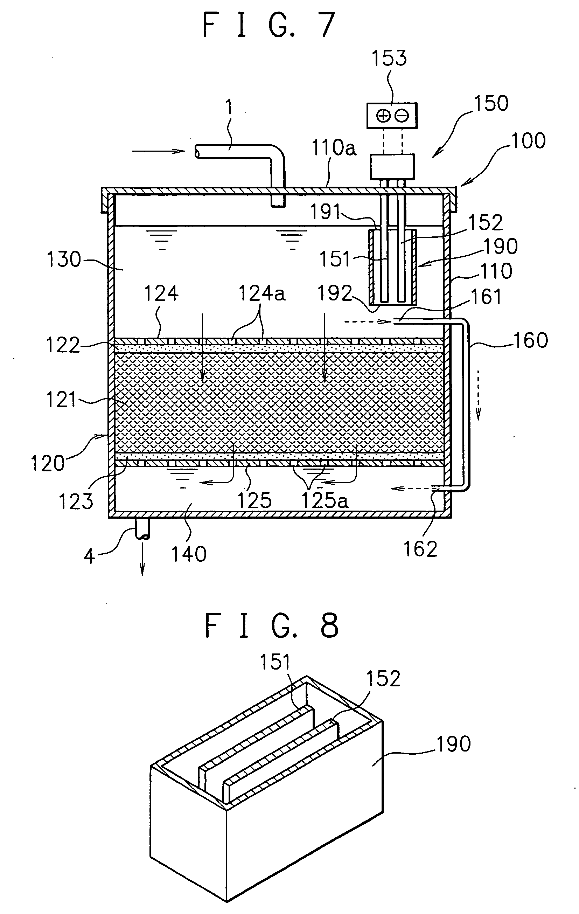

Figures 7 and 8 show a mineral-water supplying apparatus in accordance with the fifth embodiment of this invention. The apparatus of this embodiment is obtained by covering the chlorine producing electrodes 151, 152 of the chlorine generator 150 of the mineral-water producing apparatus 100 in accordance with the second embodiment with a partition member 190. The same constituents as those of the apparatus in accordance with the first embodiment are denoted with the same reference numerals and the description thereof will be omitted.

The external form of the partition member 190 is a rectangular solid with its top and bottom opened. The partition member 190 is immersed in the water in the inlet chamber 130 and arranged so that it covers the chlorine producing electrodes 151, 152 from nearly the middle of their length to the lower ends. The upper and lower openings 191, 192 of the partition member 190 are so formed that water can flow through the partition member 190 via the openings. The lower opening 192 of the partition member 190 is positioned near the inlet 161 of the bypass pipe 160.

According to the apparatus of this embodiment, when energizing the chlorine producing electrodes 151, 152 from the power supply 153, hypochlorous acid is produced between the chlorine producing electrodes 151 and 152. This increases the concentration of available chlorine in the water staying inside the partition member 190.

On the other hand, since the water in the partition member 190 can flow out only through its upper and lower openings 191, 192, water flowing into the bypass pipe 160 has a very high concentration of available chlorine.

Accordingly, even if the amount of water in the bypass pipe 160 is small, the concentration of the available chlorine in the mineral water in the outlet chamber 140 can be increased to a proper value. Besides, the amount of the water passing through the mineral eluting material(s) 121 can be increased as much as the amount of the water flowing through the bypass pipe 160 is decreased, and therefore the decrease in the mineral concentration can be minimized.

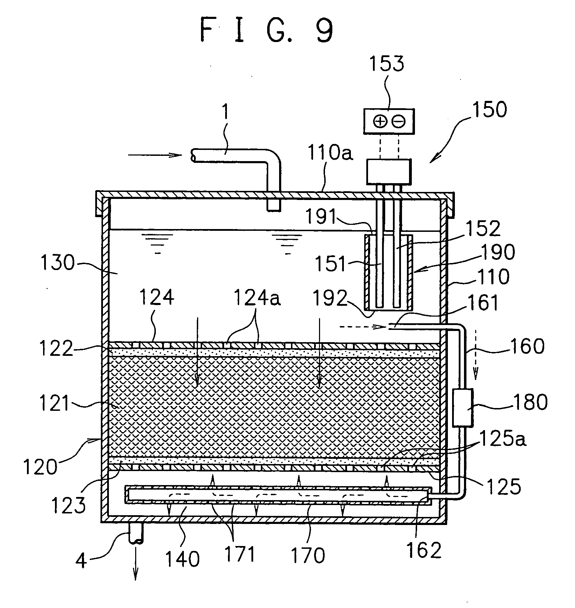

Figure 9 shows a mineral-water supplying apparatus in accordance with the sixth embodiment of this invention. The apparatus of this embodiment includes all of the diffusion pipe 170 used in the apparatus in accordance with the third embodiment, the flow control valve 180 used in the apparatus in accordance with the fourth embodiment, and the partition member 190 used in the apparatus in accordance with the fifth embodiment.

According to the mineral-water supplying apparatus of this embodiment, the mineral water in the outlet chamber 140 is homogenized by the diffusion pipe 170. The concentration of the available chlorine in the mineral water in the outlet chamber 140 is controlled by the flow control valve 180. And the decrease in the mineral concentration can be prevented by the partition member 190.

A mineral-water producing apparatus which includes any two of the diffusion pipe 170, the flow control valve 180 and the partition member 190, not shown in the figure, may applicable to the mineral-water supplying apparatus of this invention. The bypass pipe 160 may be laid so that it penetrates the mineral eluting portion 120, though not shown in the figure. Further, a bypass line (not shown in the figure) may be formed on the side wall of the mineral eluting tank 110, instead of using the bypass pipe 160.

Industrial Applicability

The mineral-water supplying apparatus of this invention is useful not only for drink spouts for business use, that is, drink spouts for selling drinks, but also for drinking water feeders which are designed to improve the quality of drinking water for domestic purpose.

**Claims**

1. A mineral-water supplying apparatus comprising:

   a mineral-water producing apparatus for producing mineral water by passing raw water, such as city water, through a mineral eluting material(s);
   a drink conveying pipe for conveying the mineral water produced in the mineral-water producing apparatus to a drinking water spout;
   a cleaning water pipe diverging from the drink conveying pipe for conveying the mineral water to a cleaning-water spout;
   a pump for forcing the mineral water produced in the mineral-water producing apparatus to flow through the drink conveying pipe and the cleaning water pipe; and
   a chlorine-concentration increasing means for increasing the concentration of chlorine in the mineral water produced by the mineral-water producing apparatus.

2. The mineral-water supplying apparatus according to claim 1,
wherein the chlorine-concentration increasing means is made up of a chlorine generator for adding available chlorine to the mineral water flowing through the cleaning water pipe.

3. The mineral-water supplying apparatus according to claim 2,
wherein a recirculation pipe, which conveys the mineral water with available chlorine added thereto by the chlorine generator back to the mineral-water producing apparatus, is provided between the mineral-water producing apparatus and the chlorine generator.

4. The mineral-water supplying apparatus according to claim 3,
wherein the tip portion of the recirculation pipe is arranged in the collection tank portion of the mineral-water producing apparatus into which portion mineral water flows and provided with a diffusion pipe capable of radially diffusing the mineral water conveyed through the recirculation pipe.

5. The mineral-water supplying apparatus according to claim 3,
wherein a drain pipe with an on-off valve is connected to the drink conveying pipe downstream of the point where the cleaning water pipe diverges therefrom.

6. The mineral-water supplying apparatus according to claim 4,
wherein a drain pipe with an on-off valve is connected to the drink conveying pipe downstream of the point where the cleaning water pipe diverges therefrom.

7. The mineral-water supplying apparatus according to claim 1,
wherein a cleaning nozzle for spraying cleaned mineral water into a container for taking mineral-water is provided on the tip of the cleaning water pipe.

8. The mineral-water supplying apparatus according to claim 2,
wherein a cleaning nozzle for spraying cleaned mineral water into a container for taking mineral-water is provided on the tip of the cleaning water pipe.

9. The mineral-water supplying apparatus according to claim 3,
wherein a cleaning nozzle for spraying cleaned mineral water into a container for taking mineral-water is provided on the tip of the cleaning water pipe.

10. The mineral-water supplying apparatus according to claim 4,
wherein a cleaning nozzle for spraying cleaned mineral water into a container for taking mineral-water is provided on the tip of the cleaning water pipe.

11. The mineral-water supplying apparatus according to claim 5,
wherein a cleaning nozzle for spraying cleaned mineral water into a container for taking mineral-water is provided on the tip of the cleaning water pipe.

12. The mineral-water supplying apparatus according to claim 6,
wherein a cleaning nozzle for spraying cleaned mineral water into a container for taking mineral-water is provided on the tip of the cleaning water pipe.

13. The mineral-water supplying apparatus according to claim 1,
wherein the mineral-water producing apparatus comprises a mineral eluting tank, wherein an inlet chamber, an outlet chamber and the mineral eluting material(s) are arranged in the mineral eluting tank, the inlet chamber being positioned upstream of said material(s) to receive chlorine-ion containing water and provided with a chlorine generator, the outlet chamber being positioned downstream of said material(s) to receive the mineral water which is produced by passing the chlorine-ion containing water from the inlet chamber through the mineral eluting material(s).

14. The mineral-water supplying apparatus according to claim 13,
wherein the chlorine-concentration increasing means is made up of: the chlorine generator; and a bypass line for conveying the water in the inlet chamber to the outlet chamber in such a manner as to allow the water to flow around the mineral eluting material(s).

**15.** The mineral-water supplying apparatus according to claim 14,
wherein a diffusion pipe, which is capable of radially diffusing the water conveyed through the bypass line, is provided on the outlet side of the bypass line.

**16.** The mineral-water supplying apparatus according to claim 14,
wherein a flow control means is provided in the bypass line.

**17.** The mineral-water supplying apparatus according to claim 15,
wherein a flow control means is provided in the bypass line.

**18.** The mineral-water supplying apparatus according to claim 14,
wherein the inlet of the bypass line is positioned near the chlorine producing portion of the chlorine generator.

**19.** The mineral-water supplying apparatus according to claim 15,
wherein the inlet of the bypass line is positioned near the chlorine producing portion of the chlorine generator.

**20.** The mineral-water supplying apparatus according to claim 16,
wherein the inlet of the bypass line is positioned near the chlorine producing portion of the chlorine generator.

**21.** The mineral-water supplying apparatus according to claim 17,
wherein the inlet of the bypass line is positioned near the chlorine producing portion of the chlorine generator.

**22.** The mineral-water supplying apparatus according to claim 14,
wherein a partition member is immersed in the water so as to surround the chlorine producing portion of the chlorine generator and the inlet of the bypass line is positioned near a opening of the partition member.

**23.** The mineral-water supplying apparatus according to claim 15,
wherein a partition member is immersed in the water so as to surround the chlorine producing portion of the chlorine generator and the inlet of the bypass line is positioned near a opening of the partition member.

**24.** The mineral-water supplying apparatus according to claim 16,
wherein a partition member is immersed in the water so as to surround the chlorine producing portion of the chlorine generator and the inlet of the bypass line is positioned near a opening of the partition member.

**25.** The mineral-water supplying apparatus according to claim 17,
wherein a partition member is immersed in the water so as to surround the chlorine producing portion of the chlorine generator and the inlet of the bypass line is positioned near a opening of the partition member.

**26.** The mineral-water supplying apparatus according to claim 18,
wherein a partition member is immersed in the water so as to surround the chlorine producing portion of the chlorine generator and the inlet of the bypass line is positioned near a opening of the partition member.

**27.** The mineral-water supplying apparatus according to claim 19,
wherein a partition member is immersed in the water so as to surround the chlorine producing portion of the chlorine generator and the inlet of the bypass line is positioned near a opening of the partition member.

**28.** The mineral-water supplying apparatus according to claim 20,
wherein a partition member is immersed in the water so as to surround the chlorine producing portion of the chlorine generator and the inlet of the bypass line is positioned near a opening of the partition member.

**29.** The mineral-water supplying apparatus according to claim 21,
wherein a partition member is immersed in the water so as to surround the chlorine producing portion of the chlorine generator and the inlet of the bypass line is positioned near a opening of the partition member.

# F I G. 1

# F I G. 2

# F I G. 3

# F I G. 4

# F I G. 5

# F I G. 6

# F I G. 7

# F I G. 8

# FIG. 9

## INTERNATIONAL SEARCH REPORT

| International application No. |
|---|
| PCT/JP03/08485 |

| A. CLASSIFICATION OF SUBJECT MATTER |
|---|
| Int.Cl⁷ C02F1/68, C02F1/46, C02F1/50 |

According to International Patent Classification (IPC) or to both national classification and IPC

| B. FIELDS SEARCHED |
|---|

Minimum documentation searched (classification system followed by classification symbols)
　　Int.Cl⁷ C02F1/68, C02F1/46, C02F1/50, G07F13/00

Documentation searched other than minimum documentation to the extent that such documents are included in the fields searched

| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 2002-346551 A (Sanden Corp.),<br>03 December, 2002 (03.12.02),<br>Full text<br>(Family: none) | 1-29 |
| Y | JP 2002-336803 A (Sanden Corp.),<br>26 November, 2002 (26.11.02),<br>Full text<br>(Family: none) | 1-29 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 October, 2003 (15.10.03) | 28 October, 2003 (28.10.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

| International application No. |
| --- |
| PCT/JP03/08485 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | US 5443739 A  (J. VOGEL PREMIUM WATER CO.),<br>22 August, 1995 (22.08.95),<br>Full text<br>& JP 8-503650 A          & AU 4928693 A<br>& WO 94/06547 A1         & CA 2144519 A<br>& MX 9305697 A           & US 5427682 A<br>& EP 663851 A            & AU 669001 B<br>& US 5597487 A           & BR 9307053 A | 1-29 |
| Y | JP 7-163982 A  (Yoshitane TAMURA),<br>27 June, 1995 (27.06.95),<br>Claims<br>(Family: none) | 3,4,14-29 |
| Y | JP 2002-126766 A  (Sanden Corp.),<br>08 May, 2002 (08.05.02),<br>Page 5, Par. Nos. [0036] to [0041]<br>(Family: none) | 5,6 |

Form PCT/ISA/210 (continuation of second sheet) (July 1998)